# EUROPEAN PATENT APPLICATION

(11) **EP 4 119 345 A1**
(43) Date of publication of application: **18.01.2023**
(21) Application number: 21185341.1
(22) Date of filing: 13.07.2021
(51) Int. Cl.: B32B 27/32, A01F 25/13

(54) **MULTILAYER FILM COMPRISING RECYCLED POLYETHYLENE USEFUL AS SILAGE FILM**

(71) Applicant: Trioworld Ombrée d'Anjou SAS, 49420 Pouancé (FR)
(72) Inventor: GILLES, Anne-Laure, Pouancé, 49420 (FR)
(74) Representative: AWA Sweden AB

(57) **Abstract**

There is provided a multi-layer polyethylene film comprising a layer A; a layer B; wherein the film comprises from 20 to 60 % by weight of post-consumer recycled polyethylene and from 40 to 80 % by weight of a linear low density polyethylene having a density of from 0.905 to 0.916 g/cm³ and a melt index (190 °C/2.16 kg) of from 0.6 to 0.9 g/10 min based on the total weight of the multi-layer film. The film has good mechanical properties and is useful in the production of silage.

## Description

### Technical field

The present invention relates to a multi-layer polyethylene film comprising recycled polyethylene, a method for producing such a film, a use of such a film as a protective film for the production of silage and to a method of producing silage using a bunker silo or a pit silo.

### Background

Plastic films are currently used in a multitude of applications such as during the production of silage, for example for covering a pit silo, or bunker silo.

Plastic films for covering a pit silo, or bunker silo must typically be mechanically durable e.g. in terms of puncture resistance and stretchability, resistant to weather conditions e.g. sun, rain, snow, temperature changes, wind and hail, have barrier properties e.g. oxygen resistance and have a limited light transmission.

When producing silage in silos, a large volume of crop is deposited in an open bunker, or formed into a heap on the ground, and subsequently covered with a protective silage film to provide an airtight cover. The crop may be compacted prior to covering it with the protective film. The film is often secured by placing heavy objects, such as tyres, on top of the film.

Current standard agricultural silage films are typically multilayer films which consist mainly of virgin plastic material, in particular a linear low density polyethylene (LLDPE). Conventionally, various additives such as pigments, tackifiers, UV stabilizers, etc, are added to the film composition in order to meet the requirements of the intended use. The plastics industry is today increasingly striving to reduce its negative effects on environment and its contribution to global warming caused by consumption of fossile raw material and ultimately the carbon dioxide emission and "carbon footprint" of its products. One way to improve sustainability in this context is to reduce the overall consumption of raw fossile material by using alternative, renewable materials, improving recyclability of the products, or, in the case of plastic film, making thinner and lighter films requiring less material. It has also been proposed to use recycled plastic material as a starting material for making plastic products such as films.

In general, recycled plastic material may derive from industrial sources, called post-industrial recycled material (PIR), or from discarded consumer plastic products, (post-consumer recycled material, PCR). The composition and quality of PIR and PCR may differ greatly, PCR being of lower quality. PCR material usually comprises polymers from diverse sources, thereby giving the recycled polymeric material poor or unwanted predicted mechanical properties. As an example, recycled plastic material usually contains impurities, which have an effect on the mechanical properties of a produced film, and unmelted particles, which may easily cause problems during film manufacture, especially for blown film manufacturing. Thus, PCR material has been regarded as unsuitable for incorporation at a high content into multi-layer films for silage production.

Despite advancements made in recent years, there remains a need for polymer films, in particular films useful as silage film, having a lower environmental or climate impact without loss in functional properties.

### Summary

It is an object of the present invention to at least partially overcome the problems of the prior art, and to provide a more sustainable multi-layer film that is useful as a film in silage applications, in particular a high performance film for pit silo and bunker silo applications. This and other objects, which will become apparent in the following, are accomplished by a multi-layer film, a method for manufacturing a multi-layer film, use of a multi-layer film as a protective film in the production of silage, and a method for producing silage, as defined in the independent claims.

According to a first aspect of the invention, there is provided a multi-layer film comprising,
- a layer A;
- a layer B;
wherein the film comprises from 20 to 60 % by weight of post-consumer recycled polyethylene and from 40 to 80 % by weight of a linear low density polyethylene having a density of from 0.905 to 0.916 g/cm³ and a melt index (190 °C/2.16 kg) of from 0.6 to 0.9 g/10 min based on the total weight of the multi-layer film.

The inventive multi-layer film has proven to be highly promising for silage applications. The present invention is based on the realisation that by forming multilayer a film comprising a linear low density polyethylene (LLDPE) having a density of from 0.905 to 0.916 g/cm³ and a melt index (190 °C/2.16 kg) of from 0.6 to 0.9 g/10 min and a post-consumer recycled polyethylene (PCR-PE) exhibits surprisingly high mechanical properties, e.g. dart drop resistance. The combination of the LLDPE as defined above, and PCR-PR, renders a film which exhibits properties highly relevant for silage applications e.g. bunker silo and pit silo applications. Expressed differently, the inventor has realised that the combination of LLDPE as defined above and PCR-PE provides a film having a high content of renewable while still presenting desirable and surprisingly high mechanical properties. The present invention thereby provides a film having lower carbon footprint than a convention fossil based film, but without suffering from unsatisfying mechanical properties found in prior art films.

By introducing a PCR-PE in the multi-layer film the environmental impact is decreased as compared to utilizing a corresponding amount of virgin polyethylene. This since repurposing/recycling a polyethylene material decreases the consumption of fossil raw material and thus decreases the negative environmental effects, the contribution to global warming, carbon emissions and carbon footprint, thereby alleviating problems associated with the prior art.

As explained below, "post-consumer recycled polyethylene" ("PCR-PE") is used herein to describe polyethylene material that has been previously incorporated into one or more products and optionally used for its intended purpose, and then collected and processed in a recycling process by the original manufacturer or one or more other entities to produce a PCR material. Hence, the post-consumer recycled polyethylene has previously been incorporated into one or more end products, collected and typically processed in a recycling process.

It is well-known in the industry that a recycled ethylene material, such as post-consumer recycled polyethylene, possesses unsatisfying mechanical properties compared to a corresponding virgin material i.e. the properties of the PE material deteriorates over time and when in use, for example by photodegradation.

PCR-PE typically comprises impurities. Thus, the PCR-PE may comprise impurities in an amount of at least 0.01%, by weight of the PCR-PE. Herein, the term "impurities" may refer to any material in the PCR-PE not being a polyethylene material. In an alternative definition, the term impurities may refer to any material in the PCR-PE having a density outside the range of 0.890-0.980 g/cm³ such as outside the range of 0.890-0.940 g/cm³. Examples of impurities include cellulosic fibres, dirt/dust, decomposed organic matter such as humus, polyamide materials and ethyl vinyl alcohol materials, or other polymers having a density outside the range of 0.890-0.980 g/cm³.

Herein, the term "multi-layer film" refers to a film having at least two layers. A plurality of layers allows for a combination of different materials and therethrough an end-product comprising a combination of properties stemming from the different materials and layers.

Herein, the term "melt index", also referred to as "melt mass-flow rate", refers to a measure of flow of the melt of a thermoplastic polymer, and expressed differently a measure of the viscosity of a polymer melt at a given temperature under a given force for a predetermined period of time. The melt index can be measured according to ASTM D1238.

Herein, the terms "virgin ethylene polymer" and "virgin ethylene based copolymer" refers to polymers and copolymers, respectively, made from materials manufactured directly from nature in their raw form. The materials have never been used, developed, or processed before being processed before being processed to the polymer film. The source for the virgin ethylene polymer and the virgin ethylene based copolymer are typically fossil sources.

A linear low density polyethylene (LLDPE) is typically a copolymer of ethylene and a longer chain olefin, such as a copolymer of ethylene and hexene or of ethylene and octene. The properties of the LLDPE are described herein. The LLDPE used in multilayer polyethylene films can be LLDPE prepared using a Ziegler Natta or Philips type catalyst and a comonomer, such as hexene, butene or octene ,such as metallocene LLDPE (mLLDPE).

Metallocene is tiny particles of positively charged metal ions sandwiched between two rings of carbon atoms which have five atoms apiece. Also known as "single-site" catalysts, so named because they have one singe active site per catalyst particle, each identical from one particle to another. Single site catalysts allow producing narrow molecular weight distribution (MWD) and provides increased film strength, lower extractables and better optical properties.

Preferably, the LLDPE is a mLLDPE, such as a mLLDPE having a density of from 0.905 to 0.916 g/cm³ and a melt index (190 °C/2.16 kg) of from 0.6 to 0.9 g/10 min.

The LLDPE as defined above may have a density in the range of from 0.905 to 0.916 g/cm³, such as 0.910 to 0.916 g/cm³, such as from 0.912 to 0.916 g/cm³, preferably from 0.912 to 0.915 g/cm³, such as from 0.913 to 0.915 g/cm³.

In some embodiments, the LLDPE as defined above may have a melt index (190 °C/2.16 kg) of from 0.6 to 0.9 g/10 min, such as from 0.7 to 0.9 g/10 min, such as from 0.75 to 0.85 g/10 min, as determined according to ASTM D1238.

In some embodiments, the LLDPE as defined above may have a peak melting temperature of from 120 to 124 °C, such as from 121 to 124 °C, such as from 122 to 124 °C.

The multi-layer film may comprise post-consumer recycled polyethylene at a content of at least 10 %, such as at least 20 %, such as at least 30 %, such as at least 50 %, such as of 10 to 80 %, such as of 10 to 70 percent, such as of 15 to 70 %, preferably such as from 20 to 60 %, such as from 30 to 60 %, such as from 40 to 60 % by total weight of the multi-layer film. A high content of PCR-PE allows for a decreased environmental impact through e.g. decreased use of fossil raw material as compared to utilizing a virgin plastic material e.g. virgin polyethylene.

The multi-layer film may comprise LLDPE as defined above at a content of at least 10 %, such as at least of 20 %, such as at least of 30 %, such as at least of 40 %, such as at least of 50 %, such as from 30 to 90 %, such as from 30 to 85 %, such as from 40 to 80 %, such as from 40 to 70 %, such as from 40 to 60 %, such as from 45 to 55 % by total weight of the multi-layer film.

In some embodiments, the LLDPE as defined above comprises an ethylene-1-hexene copolymer.

In some embodiments, the LLDPE as defined above is a metallocene LLDPE (mLLDPE).

Herein, the term "peak melting temperature" refers to the average melting temperature of crystallites in a polymer.

In some embodiments the LLDPE as defined above may have tensile strength at yield in the machine direction of from 6 to 10 MPa, such as from 7 to 9 MPa as determined according to ASTM D882.

In some embodiments the LLDPE as defined above may have a tensile strength at yield in the transverse direction of from 8 to 11 MPa, such as from 9-10 MPa as determined according to ASTM D882.

In some embodiments, LLDPE as defined above may have an ultimate tensile strength in the machine direction of from 50 to 70 MPa, such as from 55 to 65 MPa as determined according to ASTM D882.

In some embodiments, LLDPE as defined above may have an ultimate tensile strength in the transverse direction of from 40 to 60 MPa, such as from 45 to 55 MPa as determined according to ASTM D882.

In some embodiments, wherein the multi-layer film comprises a layer C, wherein the layer B is arranged between the layer A and the layer C. In some embodiments, the multi-layer film may comprise at least three layers, such as five layers, such as seven layers.

Either one, or any combination, of the layers A, B and C may comprise PCR-PE.

In some embodiments, the multi-layer film may comprise two intermediate layers A' and C'. Layer A' can be arranged between layer A and layer B, and layer C' can be arranged between layer B and layer C so as to form intermediate layers. The intermediate layers A' and C' may have identical or different compositions. The intermediate layers A' and C' may have essentially identical or different composition as either one of layer A, layer B or layer C. In some embodiments, the multi-layer may comprise two or more intermediate layers.

In some embodiments, layer B of the multi-layer film may comprise from 65 to 95 %, such as from 70 to 95 %, such as from 75 to 95 %, such as from 80 to 95 %, such as from 85 to 95 %, such as from 90 to 95 %, by weight of the PCR-PE based on the weight of the layer B. A high content of PCR-PE allows for a decreased environmental impact through e.g. decreased use of fossil raw material as compared to utilizing a virgin PE.

In some embodiments, layer A may comprise at least 70 %, such as at least 75 %, such as at least 80 %, such as at least 85 %, such as at least 90 % by weight of the linear low density polyethylene as defined above based on weight of the layer A.

In some embodiments, layer C may comprise at least 70 %, such as at least 75 %, such as at least 80 %, such as at least 85 %, such as at least 90 % by weight of the linear low density polyethylene as defined above based on weight of the layer C.

Layer A and C may have identical or different compositions.

In some embodiments, the multi-layer film may have a dart drop resistance of at least 600 g, such as of at least 700 g, such as from 600 g to 2200 g, such as from 600 g to 1600 g, such as from 700 g to 1400 g, such as from 800 to 1300 g, such as from 900 to 1200 g as determined according to ASTM D1709A. A sufficiently high dart drop resistance allows the multi-layer film to withstand external impact caused by for example falling debris or a misplaced pitchfork. The inventors have surprisingly shown that a film formed by a LDPE as defined herein, and a PCR-PE as defined herein, unexpectedly exhibits a high dart drop value of at least 600 g, such as of at least 700 g, as measured according to ASTM D1709A. Consequently, there is provided a film having a relatively carbon footprint as compared to fossil films, but with comparable and/or uncompromised dart drop resistance. The inventors have shown that the inventive film exhibits a higher dart drop resistance as compared to comparable films containing a same or similar amount of PCR-PE, but which utilizes a different LLDPE.

The term "dart drop resistance" is used herein as a synonym to the impact resistance of plastic film by the free-falling dart method, which can be determined according to ASTM D1709A.

In some embodiments, layer A may have a thickness of from 15 to 30 % and/or the layer C has a thickness of from 20 to 35 % of the thickness of the multi-layer film. In some embodiments, layer A and/or layer C may have a thickness of from 15 to 30 % or from 20 to 35 % of the thickness of the multi-layer film. Layer A and layer C may be of different or substantially equal thicknesses.

In some embodiments, layer B may have a thickness of from 35 to 65 % of the thickness of the multi-layer film. In some embodiments, layer B may have a thickness of from 40 to 70 %, such as from 30 to 60 % of the thickness of the multi-layer film.

In some embodiments, layer A may have a thickness of from 10 to 40 µm, such as from 20 to 40 µm, such as from 20 to 30 µm.

In some embodiments, layer C may have a thickness of from 20 to 50 µm, such as from 30 to 50 µm, such as from 30 to 40 µm.

In some embodiments, layer B may have a thickness of 40 to 55 µm, such as from 43 to 55 µm.

In some embodiments, the multi-layer film may have a thickness of from 90 µm to 150 µm, such as from 100 µm to 150 µm, such as from 110 µm to 150 µm. The thickness of the multi-layer film is one of the factors providing the multi-layer film with its mechanical properties.

In some embodiments, the multi-layer film may have a width of from 4 to 20 meters, such as from 8 to 16 meters. An appropriate width of the films allows for covering an effective amount of straw material in a silage application such as a bunker silo or a pit silo.

The film may further comprise UV stabilizers in one or more of the layers, e.g. in layer A and/or layer C, and optionally in each of the layers. The film may further comprise colorants in one or more of the layers, e.g. in layer A and/or layer C, and optionally in each of the layers. The film may further comprise dyes in one or more of the layers, e.g. in layer A and/or layer C, and optionally in each of the layers. The film may further comprise pigments in one or more of the layers, e.g. in layer A and/or layer C, and optionally in each of the layers. The film may further comprise tackifiers in one or more of the layers, e.g. in layer A and/or layer C, and optionally in each of the layers. The film may further comprise slip agents in one or more of the layers, e.g. in layer A and/or layer C, and optionally in each of the layers. The film may further comprise nucleating agents in one or more of the layers, e.g. in layer A and/or layer C, and optionally in each of the layers. The film may further comprise polymer processing aids in one or more of the layers, e.g. in layer A and/or layer C, and optionally in each of the layers. Thus, in some embodiments, the multi-layer film may comprise one or more additives selected from the group consisting of UV stabilizers, colorants, dyes, pigments, tackifiers, slip agents, nucleating agents, or a polymer processing aids in one or more of the layers, e.g. in layer A and/or layer C, and optionally in each of or any combination of the layers.

Herein, the term "UV stabilizer" refers to an additive providing protection to a material from the long-term degradation effects from light, most frequently ultraviolet radiation (UV). A UV stabilizer may be advantageous for preventing chain reactions caused by e.g. radicals within the polyolefin layer(s) of the multi-layer film e.g. during storage outdoors of the multi-layer film.

Herein, the term "polymer processing aids" refers to a component/compound used to improve processability and handling of the multi-layer film.

Herein, the term "tackifier" refers to an agent that provides cling to a film. Such an agent may be added to a layer of the polyethylene film in order to increase the cling of the layer. For instance, a tackifier may be a soft polymer, or a migrating tackifier. A tackifier thus serves to increase the cling of the polyethylene film, in particular, one or both of the outer layers.

Herein, the term "nucleating agent" refers to an agent accelerating the rate of a polymer's crystallization and promote crystallization.

Herein, the term "slip agent" refers to an agent reducing friction of a polymer product and enhances processing e.g. improves movement in extrusion lines.

In some embodiments, layer A and/or layer C comprises the PCR-PE.

Typically, the film according to embodiments of the present invention allows an anaerobic environment to be formed and thereby nutrients and energy content of the silage to be preserved during storage. A silage film may form a gas barrier, in particular an oxygen barrier. The oxygen barrier may be measured according to known standards, such as ASTM D3985 or DIN 53380-3.

In some embodiments, the multi-layer film is a coextruded multi-layer blown film comprising at least two layers. Preferably, the multi-layer film is a co-extruded multi-layer blown film comprising at least three layers: at least one core layer arranged between two exterior layers.

By the term "mechanical properties" or "mechanical performance" is herein mainly meant the mechanical strength of the material, measured in terms of at least one of tensile strength, tear strength and dart drop resistance. Tensile strength, measured as force per unit area, is defined as the maximum stress that a material can withstand while being stretched or pulled before failing or breaking. Tear strength, typically measured as force per unit length, is defined as the resistance of a material to the growth of e.g. a cut when under tension. Elongation at break is defined as the ultimate elongation (given as percentage of the initial length) of a material before it breaks under tension. Dart drop resistance), typically measured as mass per unit length, is defined as the relative ability of a material to withstand a falling dart without breaking.

In some embodiments, the multi-layer film may be a silage film.

According to one aspect of the invention there is provided a method for manufacturing a multi-layer film as described herein, comprising
- providing a first extrudable composition;
- providing a second extrudable composition;
- extruding the first extrudable composition to at least form the layer A;
- extruding a second extrudable composition to form the layer B.

In some embodiments, the method for manufacturing further comprises
- providing a third extrudable composition;
- extruding the third extrudable composition at least to form the layer C.

In some embodiments, the extrudable compositions are co-extruded in a blow film extrusion process.

In some embodiments, the method for manufacturing further comprises
- providing a post-consumer recycled polyethylene;
wherein at least one of said extrudable compositions comprises the post-consumer recycled polyethylene.

At least some of the advantages with the above-mentioned method for manufacturing are analogous with the advantages of the multi-layer film presented throughout the applications.

According to one aspect of the invention, there is provided a use of a film as described herein as a protective film for the production of silage.

According to some embodiments, the use of the film is for covering a pit silo or a bunker silo.

According to one aspect of the invention, there is provided a method for producing silage using a bunker silo or a pit silo, comprising the steps of arranging a volume of bulk crop material in a bunker or on the ground; optionally compacting the bulk crop material; and covering the bulk crop material with a multilayer film as described herein.

Preferably, the multi-layer film is arranged over the crop to provide an airtight protective barrier.

Silage can be produced from grasses as well as numerous other crops, including grains (barley, oats, rice, wheat, rye, millet), corn, cornstalk, legumes, beans, soybeans, and vegetables.

Herein, the term "bulk crop material" refers to a heap of material such as grasses as well as numerous other crops, including grains (barley, oats, rice, wheat, rye, millet), corn, cornstalk, legumes, beans, soybeans, and vegetables.

It is noted that the invention relates to all possible combinations of features recited in the claims.

### Brief description of the drawings

This and other aspects of the present invention will now be described in more detail, with reference to the appended drawings showing embodiment(s) of the invention, in which:
Figure 1 schematically shows the layer structure of a multilayer film according to embodiments of the invention.
Figure 2 schematically shows the structure of a multilayer film having 3 layers, according to embodiments of the invention.
Figure 3 schematically shows the structure of a multilayer film having 5 layers, according to embodiments of the invention.
Figure 4 shows a flow-sheet explaining the steps of a method in accordance with embodiments of the invention.
Figure 5 schematically shows a multi-layer film covering crops in a pit silo.

As illustrated in the figures, the sizes of layers may be exaggerated for illustrative purposes and, thus, are provided to illustrate the general structures of embodiments of the present invention. Like reference numerals refer to like elements throughout.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

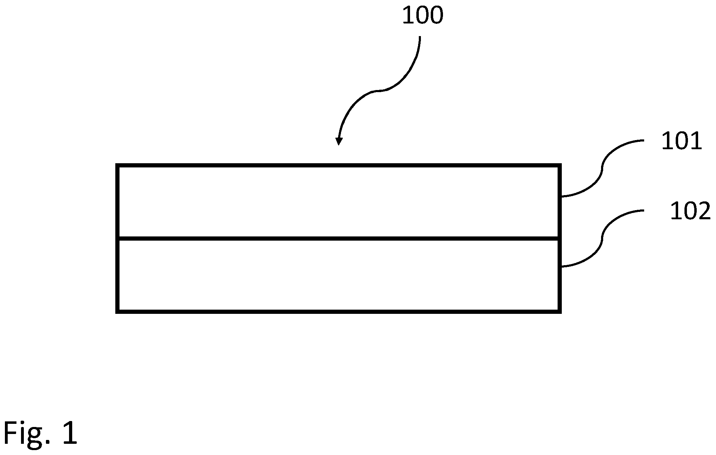

Figure 1 shows, in cross-section, an example of a multi-layer film according to embodiments of the invention. The multi-layer film 100 comprises a first layer 101 and a second layer 102. At least one of the layers should comprise a PCR-PE and at least one of the layers should comprise LLDPE having a density of from 0.905 to 0.916 g/cm³ and a melt index (190 °C/2.16 kg) of from 0.6 to 0.9 g/10 min based on the total weight of the film. The LLDPE may preferably be a mLLDPE, such as a mLLDPE comprising a copolymer of ethylene-1-hexene.

The multi-layer film 100 may have a thickness of from 90 µm to 150 µm, such as from 100 µm to 150 µm, such as from 110 µm to 150 µm.

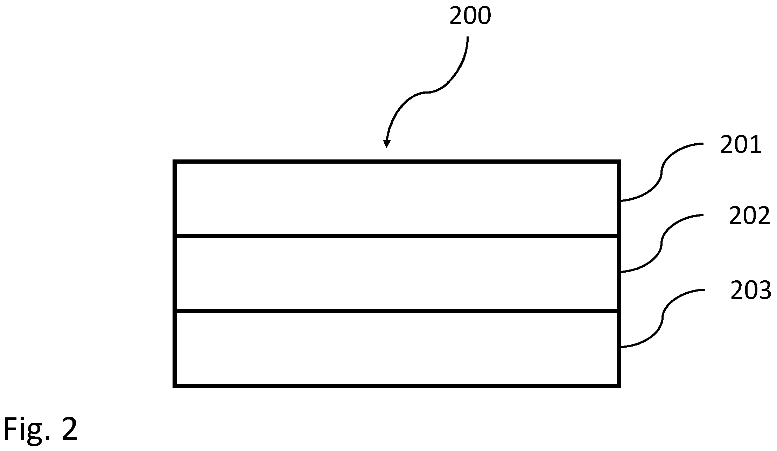

Figure 2 shows, in cross-section, an example of a multi-layer film according to embodiments of the invention. The multi-layer film 200 comprises a first outer layer 201 and a second outer layer 203, also referred to as layer A and layer C respectively, which form the exterior surfaces of the multi-layer film. Between the outer layers 201, 203 there is provided a core layer 202, also referred to as layer B. Layer B is sandwiched between layer A and layer C. Additional layers may be provided in the form of intermediate layers, e.g. on opposing sides of the core layer but in between the outer layers 201, 203.

The film comprises post-consumer recycled polyethylene (PCR-PE) in an amount of 40-80 % by weight of the film. The film further comprises LLDPE having a density of from 0.905 to 0.916 g/cm³ and a melt index (190 °C/2.16 kg) of from 0.6 to 0.9 g/10 min in an amount of 20-60 % by weight of the film. The inventors have shown that a film as shown in Fig. 2 exhibits a dart drop resistance of at least 600 g, such as of at least 700 g, such as from 600 g to 2200 g, such as from at least 600 g to 1600 g, such as from 700 g to 1400 g, such as from 800 to 1300 g, such as from 900 to 1200 g as determined according to ASTM D1709A.

Herein, the core layer 202 comprises post-consumer recycled polyethylene (PCR-PE) in an amount of at least 70 % by weight of the layer, such of at least 80 % by weight of the layer, preferably of at least 90 % by weight of the layer. The core layer 202 may further comprise various additives, such as at least one additive selected from the list consisting of UV stabilizers, colorants, dyes, pigments, tackifiers, slip agents, nucleating agents, or a polymer processing aids. The core layer 202 preferably comprises less than 30 % of said additive by weight of the core layer 202, such as less than 20 % by weight of the core layer 202, such as less than 10 % by weight of the core layer 202.

Herein, the outer layers 201, 203 comprises the LLDPE having a density of from 0.905 to 0.916 g/cm³ and a melt index (190 °C/2.16 kg) of from 0.6 to 0.9 g/10 min, preferably in an amount of at least 70 % by weight of the layer. The LLDPE may be a copolymer of ethylene-1-hexene. The LLDPE may further have a peak melting temperature of from 120 to 124 °C, such as from 121 to 124 °C, such as from 122 to 124 °C.

Preferably, the LLDPE is a virgin ethylene-1-hexene copolymer having a density of 0.914 g/cm³ and a melt index of 0.8 g/10 min as measured at 190°C

Preferably, the outer layers 201, 203 each comprises from 65 to 95 % by weight of the post-consumer recycled polyethylene based on the weight of the layer B, such as from 70 to 95 %, such as from 75 to 95 %, such as from 80 to 95 %, such as from 85 to 95 %, such as from 90 to 95 %, by weight of the PCR-PE based. Each of the outer layers 201, 203 may further comprise various additives, such as at least one additive selected from the list consisting of UV stabilizers, colorants, dyes, pigments, tackifiers, slip agents, nucleating agents, or a polymer processing aids. Each outer layers 201, 203 preferably comprises less than 35 % of said additive by weight of the respective outer layer 201, 203, such as less than 20 % of said additive by weight of the respective outer layer 201, 203, such as less than 10 % of said additive by weight of the respective outer layer 201, 203, such as less than 5 % of said additive by weight of the respective outer layer 201, 203.

The layer A may have a thickness of from 15 to 30 % and/or the layer C has a thickness of from 20 to 35 % of the thickness of the multi-layer film. Layer A and/or layer C may have a thickness of from 15 to 30 % or from 20 to 35 % of the thickness of the multi-layer film. Layer A and layer C may be of different or substantially equal thicknesses.

The layer B may have a thickness of from 35 to 65 % of the thickness of the multi-layer film. The layer B may have a thickness of from 40 to 70 %, such as from 30 to 60 % of the thickness of the multi-layer film.

The layer A may have a thickness of from 10 to 40 µm, such as from 20 to 40 µm, such as from 20 to 30 µm.

The layer C may have a thickness of from 20 to 50 µm, such as from 30 to 50 µm, such as from 30 to 40 µm.

The layer B may have a thickness of 40 to 55 µm, such as from 43 to 55 µm.

The multi-layer film may have a thickness of from 90 µm to 150 µm, such as from 100 µm to 150 µm, such as from 110 µm to 150 µm.

In some embodiments, all layers may be based on polyolefins.

Preferably, the first outer layer 201 and the second outer layer 203 comprises the LLDPE at a content of at least 70 %, such as at least 80 % by weight of the total weight of the layer. The LLDPE may be a virgin ethylene-1-hexene copolymer having a density of 0.914 g/cm³ and a melt index of 0.8 g/10 min as measured at 190°C.

The LLDPE may be a metallocene LLDPE.

The term"post-consumer recycled polyethylene" ("PCR-PE") is used herein to describe polyethylene material that has been previously incorporated into one or more products and optionally used for its intended purpose, and then collected and processed in a recycling process by the original manufacturer or one or more other entities to produce a PCR material. Hence, the post-consumer recycled polyethylene has previously been incorporated into one or more end products, collected and typically processed in a recycling process.

PCR-PE typically comprises impurities. Thus, the PCR-PE may comprise impurities in an amount of at least 0.01%, by weight of the PCR-PE. Herein, the term "impurities" may refer to any material in the PCR-PE not being a polyethylene material. In an alternative definition, the term impurities may refer to any material in the PCR-PE having a density outside the range of 0.890-0.980 g/cm³ such as outside the range of 0.890-0.940 g/cm³. Examples of impurities include cellulosic fibres, dirt/dust, decomposed organic matter such as humus, polyamide materials and ethyl vinyl alcohol materials, or other polymers having a density outside the range of 0.890-0.980 g/cm³.

The polyolefin content of at least one of the the outer layers may be exclusively virgin materials. Optionally, at least one of the outer layers is free of recycled post-consumer waste polyethylene material. Optionally, both outer layers are free of PCR material. In this context, "free of" means that no PCR material is contained in said layer, by the fact that no PCR material is added to the melt extruded by the extruder in question during production of the film.

One or more of the layers of the multi-layer film may comprise a pigment. Suitable pigments for use in polyethylene films e.g. for silage making, are known to persons skilled in the art and include, for instance, titanium dioxide and carbon black. Different layers of the film may comprise different pigments and/or different amount of pigment. Silage films may include a pigment providing a light colour, such as white, light blue or light green, to the side of the film intended to face outwards, such that sunlight is reflected. Hence, at least an outer layer, e.g. layer 201 may contain a pigment providing a light colour. Further, silage films, in particular film intended for use in bunker or pit silos, may have a dark coloured second side intended to face the crop, in order to prevent light transmission into the silo. Hence, a layer, such as the layer 203, may contain a dark pigment, such as a black pigment.

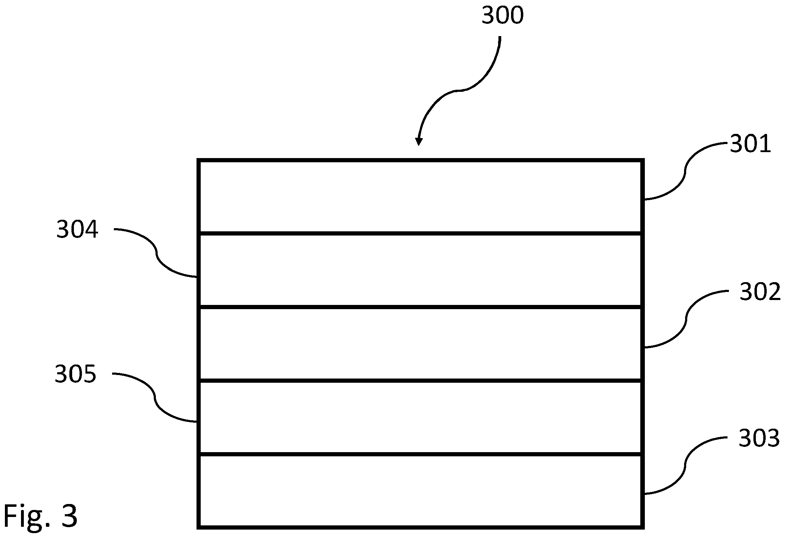

Figure 3 shows an example of a multi-layer film according to embodiments of the invention. The multi-layer film 300 comprises a first outer layer 301 and a second outer layer 303, also referred to as layer A and layer C respectively, which form the exterior surfaces of the multi-layer film 300. Between the outer layers 301, 303 there is provided a core layer 302, also referred to as layer B. The multi-layer film 300 further comprises a layer A', expressed differently a first intermediate layer 304, arranged between layer A and layer B. The multi-layer film further comprises a layer C', expressed differently a second intermediate layer 305, arranged between layer C and layer B.

Layer B is sandwiched between layer A and layer C. In embodiments having more than three layers additional layers may be provided in the form of intermediate layers, e.g. on opposing sides of the core layer but in between the outer layers.

Preferably, at least the core layer 302 comprises a PCR-PE. Preferably, the outer layers 301, 303 comprises the LLDPE having a density of from 0.905 to 0.916 g/cm³ and a melt index (190 °C/2.16 kg) of from 0.6 to 0.9 g/10 min.

Layer A' and layer C' may have the same or different compositions. Further, layer A' and/or layer C' may have the same or different compositions as one or more layers of the multi-layer film. For example, any or each of layer A' and layer C' may comprise PCR-PE.

The multilayer film 300 may comprise from 20 to 60 % by weight of post-consumer recycled polyethylene and from 40 to 80 % by weight of the linear low density polyethylene having a density of from 0.905 to 0.916 g/cm³ and a melt index (190 °C/2.16 kg) of from 0.6 to 0.9 g/10 min based on the total weight of the multi-layer film.

The multi-layer film 300 may have a thickness of from 90 µm to 150 µm, such as from 100 µm to 150 µm, such as from 110 µm to 150 µm.

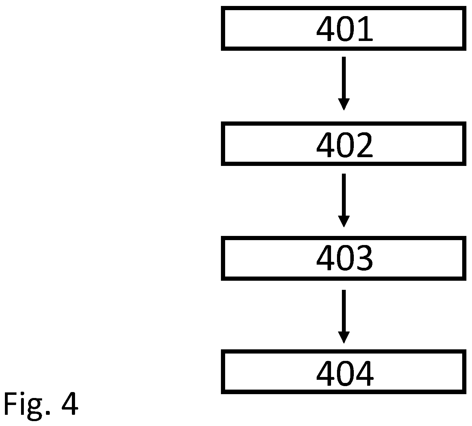

Figure 4 shows a flow-sheet describing different steps of a method for manufacturing a multi-layer film. The method (400) comprises: providing (401) a first extrudable composition; providing (402) a second extrudable composition; extruding (403) the first extrudable composition to at least form the layer A; extruding (404) a second extrudable composition to form the layer B.

The method 400 is typically a blow film extrusion process where one or more extrudable compositions are melted and thereafter air-cooled when blown out as a tubular film. In a blow film extrusion process a circular extrusion die is utilized.

The method 400 is preferably a co-extrusion process, according to known methods in the art.

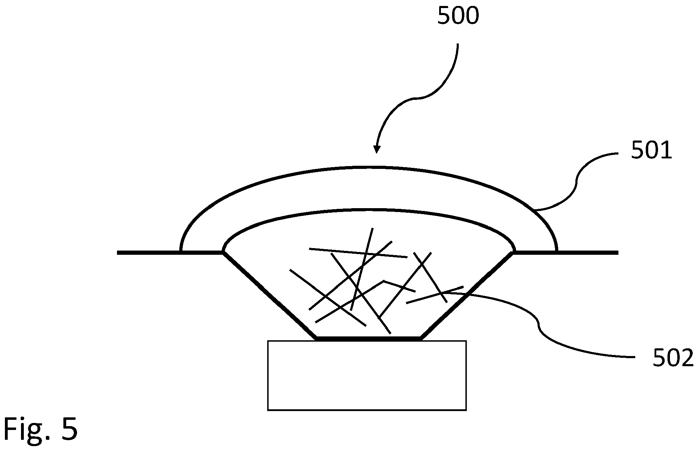

Figure 5 schematically shows the use (500) of a multi-layer film (501) as described in figure 2 covering silage (502) in a pit silo. The silage may for example originate from grasses as well as numerous other crops, including grains (barley, oats, rice, wheat, rye, millet), corn, cornstalk, legumes, beans, soybeans, and vegetables.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

### Examples

### Materials and manufacture

Multi-layer test films of various widths, thicknesses and compositions having layers layer A, layer B and layer C were produced using a full scale blown film co-extrusion process. In the test films, layer A and layer C comprise an mLLDPE being an ethylene-1-hexene copolymer having a density of 0.914 g/cm³, a melt index (190 °C/2.16 kg) of 0.8 g/10 min and layer B comprises a post-consumer recycled polyethylene (PCR-PE). Herein, layer A and C are the outer layers and layer B is the core layer arranged between the outer layers A and C. Films 1-4 was produced, and their specifics are outlined in tables 1-4. The mLLDPE of the inventive films will hereinafter be referred to as mLLDPE (Inv)

Comparative films were also manufactured using a full scale blown film co-extrusion process. The compositions of the films were similar to the films inventive films 1-4, with the main difference that a different mLLDPE is used, the different mLLDPE being an ethylene-1-hexene copolymer having a density of 0.916 g/cm³, a melt index (190 °C/2.16 kg) of 0.5 g/10 min. This mLLDPE is referred to as mLLDPE (Comp). The composition and further details of the comparative films are outlined in tables 5-8.

### Abbreviations:

PCR-PE: Post consumer recycled polyethylene
mLLDPE: Metallocene linear low density polyethylene
PPA: Polymer processing aid
PCR-PE: Post consumer recycled polyethylene
Col (Color): Colorant with the color of the colorant in parenthesis.
EVA 14%: Ethylene-vinyl acetate with 14 % vinyl acetate

**Table 1. Inventive Film 1.**

| Layer reference | Layer thickness [µm] | Material | Amount [weight %] |
|---|---|---|---|
| A | 32 | mLLDPE (Inv) | 89 |
| | | Colorant (Black) | 9 |
| | | PPA | 2 |
| B | 35 | PCR-PE | 93 |
| | | Colorant (Green) | 6 |
| | | PPA | 1 |
| C | 45 | mLLDPE (Inv) | 92 |
| | | Colorant (Black) | 6 |
| | | PPA | 2 |

**Table 2. Inventive Film 2**

| Layer reference | Layer thickness [µm] | Material | Amount [weight %] |
|---|---|---|---|
| A | 25 | mLLDPE (Inv) | 92 |
| | | Colorant (Green) | 6 |
| | | PPA | 2 |
| B | 50 | PCR-PE | 93 |
| | | Colorant (Green) | 6 |
| | | PPA | 1 |
| C | 37 | mLLDPE (Inv) | 89 |
| | | Colorant (Black) | 9 |
| | | PPA | 2 |

**Table 3. Inventive Film 3**

| Layer reference | Layer thickness [µm] | Material | Amount [weight %] |
|---|---|---|---|
| A | 25 | mLLDPE (Inv) | 92 |
| | | Colorant (Green) | 6 |
| | | PPA | 2 |
| B | 50 | PCR-PE | 93 |
| | | Colorant (Green) | 6 |
| | | PPA | 1 |
| C | 37 | mLLDPE (Inv) | 89 |
| | | Colorant (Black) | 9 |
| | | PPA | 2 |

**Table 4. Inventive Film 4**

| Layer reference | Layer thickness [µm] | Material | Amount [weight %] |
|---|---|---|---|
| A | 28 | mLLDPE (Inv) | 92 |
| | | Colorant (Green) | 6 |
| | | PPA | 2 |
| B | 45 | PCR-PE | 93 |
| | | Colorant (Green) | 6 |
| | | PPA | 1 |
| C | 39 | mLLDPE (Inv) | 89 |
| | | Colorant (Black) | 9 |
| | | PPA | 2 |

**Table 5. Comparative film C1**

| Layer reference | Layer thickness [µm] | Material | Amount [weight %] |
|---|---|---|---|
| A | 18.2 | mLLDPE (Comp) | 89 |
| | | Colorant (White) | 9 |
| | | PPA | 2 |
| B | 59.1 | PCR-PE | 81 |
| | | Colorant (White) | 8 |
| | | EVA 14 % | 10 |
| | | PPA | 1 |
| C | 22.7 | mLLDPE (Comp) | 89 |
| | | Colorant (White) | 9 |
| | | PPA | 2 |

**Table 6. Comparative film C2**

| Layer reference | Layer thickness [µm] | Material | Amount [weight %] |
|---|---|---|---|
| A | 18.2 | mLLDPE (Comp) | 89 |
| | | Colorant (White) | 9 |
| | | PPA | 2 |
| B | 59.1 | PCR-PE | 83 |
| | | Colorant (White) | 7 |
| | | EVA 14 % | 10 |
| C | 22.7 | mLLDPE (Comp) | 89 |
| | | Colorant (White) | 9 |
| | | PPA | 2 |

**Table 7. Comparative film C3**

| Layer reference | Layer thickness [µm] | Material | Amount [weight %] |
|---|---|---|---|
| A | 18.2 | mLLDPE (Comp) | 86 |
| | | Colorant (White) | 12 |
| | | PPA | 2 |
| B | 59.1 | PCR-PE | 84 |
| | | Colorant (White) | 15 |
| | | PPA | 1 |
| C | 22.7 | mLLDPE | 94 |
| | | Colorant (Black) | 4 |
| | | PPA | 2 |

**Table 8. Comparative film 4**

| Layer reference | Layer thickness [µm] | Material | Amount [weight %] |
|---|---|---|---|
| A | 22.7 | mLLDPE (Comp) | 86 |
| | | Colorant (Black) | 12 |
| | | PPA | 2 |
| B | 59.1 | PCR-PE | 93 |
| | | Colorant (Green) | 6 |
| | | PPA | 1 |
| C | 18.2 | mLLDPE (Comp) | 94 |
| | | Colorant (Green) | 6 |
| | | PPA | 2 |

### Evaluation of multi-layer films

The mechanical properties of the inventive films 1-4 was tested, and the results are displayed in Table 9. The width of film 1 was 8 m, the width of film 2 was 10 m, the with of film 3 was 14 m and the width of film was 4 16 m. The impact strength by dart drop and Elmendorf Tear Strength was evaluated. The dart drop values of the films were determined according to ASTM D1709A, at the day of production, 1 month after production, 2 months after production and 3 months after production.

The Elmendorf tear strength of the films were tested according to ASTM D1922 - 15(2020) at the day of production, 1 month after production, 2 months after production and 3 months after production. The Elmendorf tear strength was tested in the machine direction (MD) of the film as well as in the Transversal direction (TD) of the film.

The comparative films were tested in a similar manner and the results presented in Table 10. Film C1 was tested both at a width of 10 m and 12 m. The width of films C2-C4 was 10 m.

Clearly, the inventive films exhibit significantly higher dart drop values and tear strength values in the machine direction than the comparative films, both at the production day and over time.

**Table 9. Mechanical evaluation, inventive films 1-4**

| Film reference | Dart drop @ 1 day after production [g] | Elmendorf @ 1 day after production [g] | | Dart drop @ 1 month after production [g] | Elmendorf @ 1 month after production [g] | | Dart drop @ 2 months after production [g] | Elmendorf @ 2 months after production [g] | | Dart drop @ 3 month after production [g] | Elmendorf @ 3 months after production [g] | |
|---|---|---|---|---|---|---|---|---|---|---|---|---|
| | | MD | TD | | MD | TD | | MD | TD | | MD | TD |
| 1 | 2000 | 13330 | 17400 | 2000 | 13440 | 18000 | 2000 | 13920 | 18160 | 1900 | 14080 | 19320 |
| 2 | 1030 | 8320 | 22980 | 1090 | 8920 | 22120 | 1000 | 8690 | 24000 | 1000 | 8998 | 23587 |
| 3 | 1180 | 9400 | 20500 | 1180 | 9920 | 21560 | 1120 | 10200 | 21920 | 1120 | 10145 | 21893 |
| 4 | 1480 | 10300 | 21000 | 1360 | 10880 | 20340 | 1300 | 12440 | 20480 | 1240 | 12420 | 21547 |

**Table 10. Mechanical evaluation, comparative films C1-C4**

| Film reference | Width [m] | Dart drop @ 1 day after production [g] | Elmendorf @ 1 day after production [g] | | Dart drop @ 1 month after production [g] | Elmendorf @ 1 month after production [g] | | Dart drop @ 2 months after production [g] | Elmendorf @ 2 months after production [g] | | Dart drop @ 3 month after production [g] | Elmendorf @ 3 months after production [g] | |
|---|---|---|---|---|---|---|---|---|---|---|---|---|---|
| | | | MD | TD | | MD | TD | | MD | TD | | MD | TD |
| C1 | 10 | 527 | 6710 | 21360 | 501 | 6704 | 22970 | N/A | N/A | N/A | N/A | N/A | N/A |
| C1 | 12 | 309 | 3394 | 25700 | 302 | 3495 | 25142 | 269 | 3491 | 23053 | N/A | N/A | N/A |
| C2 | 10 | 475 | 8420 | 18990 | 410 | 7409 | 18243 | N/A | N/A | N/A | N/A | N/A | N/A |
| C3 | 10 | N/A | N/A | N/A | N/A | N/A | N/A | 391 | 5970 | 28507 | N/A | N/A | N/A |
| C4 | 10 | 683 | 9024 | 18371 | 599 | 10492 | 19252 | N/A | N/A | N/A | N/A | N/A | N/A |

## Claims

1. A multi-layer polyethylene film comprising,
- a layer A;
- a layer B;
wherein the film comprises from 20 to 60 % by weight of post-consumer recycled polyethylene and from 40 to 80 % by weight of a linear low density polyethylene having a density of from 0.905 to 0.916 g/cm³ and a melt index (190 °C/2.16 kg) of from 0.6 to 0.9 g/10 min based on the total weight of the multi-layer film.

2. The multi-layer film according to claim 1, wherein the multi-layer film comprises a layer C, wherein the layer B is arranged between the layer A and the layer C.

3. The multi-layer film according to claim 1 or 2, wherein the linear low density polyethylene has a density of from 0.910 to 0.916 g/cm³, such as from 0.911 to 0.916 g/cm³, such as from 0.912 to 0.915 g/cm³.

4. The multi-layer film according to any one of the preceding claims, wherein the linear low density polyethylene has a melt index (190 °C/2.16 kg) of from 0.7 to 0.9 g/10 min, such as from 0.75 to 0.85 g/10 min.

5. The multi-layer film according to any one of the preceding claims, wherein said layer B comprises from 65 to 95 % by weight of the post-consumer recycled polyethylene based on the weight of the layer B.

6. The multi-layer film according to any one of the preceding claims, wherein said layer A comprises at least 70 % by weight of the linear low density polyethylene based on the weight of the layer A, and/or wherein said layer C comprises at least 70 % by weight of the linear low density polyethylene based on the weight of the layer C.

7. The multi-layer film according to any one of the preceding claims, having a dart drop resistance of from 600 g to 1600 g, such as from 700 g to 1400 g, such as from 800 to 1300 g, such as from 900 to 1200 g as determined according to ASTM D1709A.

8. The multi-layer according to any one of the preceding claims, wherein the linear low density polyethylene comprises an ethylene-1-hexene copolymer.

9. The multi-layer film according to any one of claims 2-8, wherein the layer A has a thickness of from 15 to 30 % and/or the layer C has a thickness of from 20 to 35 % of the thickness of the multi-layer film and/or the layer B has a thickness of from 35 to 65 % of the thickness of the multi-layer film.

10. The multi-layer film according to any one of claims 2-9, wherein said multi-layer polyethylene film has a thickness of from 90 µm to 150 µm, such as from 100 µm to 150 µm, such as from 110 µm to 150 µm.

11. A method for manufacturing a multi-layer film according to claims 1-10, comprising
- providing a first extrudable composition;
- providing a second extrudable composition;
- extruding the first extrudable composition to at least form the layer A;
- extruding a second extrudable composition to form the layer B.

12. The method according to claim 11, further comprising
- providing a third extrudable composition;
- extruding the third extrudable composition at least to form the layer C.

13. Use of a film according to any one of claims 1-10 as a protective film for the production of silage.

14. Use according to claim 13, wherein the use is for covering a pit silo or a bunker silo.

15. A method for producing silage using a bunker silo or a pit silo, comprising the steps of
i) arranging a volume of bulk crop material in a bunker or on the ground;
ii) optionally compacting the bulk crop material; and
iii) covering the bulk crop material with a multilayer film according to any one of claims 1-10.
